# EUROPEAN PATENT SPECIFICATION

(11) **EP 3 550 698 B1**
(45) Date of publication and mention of the grant of the patent: **31.08.2022**
(21) Application number: 17876592.1
(22) Date of filing: 27.10.2017
(51) Int. Cl.: H02K 1/26, H02K 15/02

(54) **ELECTRIC MOTOR ROTOR, ELECTRIC MOTOR EQUIPPED WITH SAME, AND MANUFACTURING METHOD FOR SAID ROTOR**
ELEKTROMOTORROTOR, DAMIT AUSGESTATTETER ELEKTROMOTOR UND HERSTELLUNGSVERFAHREN FÜR BESAGTEN ROTOR
ROTOR DE MOTEUR ÉLECTRIQUE, MOTEUR ÉLECTRIQUE ÉQUIPÉ DE CE DERNIER, ET PROCÉDÉ DE FABRICATION DUDIT ROTOR

(30) Priority: 29.11.2016 JP 2016230885
(43) Date of publication of application: 09.10.2019
(73) Proprietor: Panasonic Intellectual Property Management Co., Ltd., Osaka-shi, Osaka 540-6207 (JP)
(72) Inventor: YAMAGUCHI, Akira, Osaka-shi Osaka 540-6207 (JP); FUJITA, Katsutoshi, Osaka-shi Osaka 540-6207 (JP); TAKEDA, Kazuto, Osaka-shi Osaka 540-6207 (JP)
(74) Representative: SSM Sandmair
(86) International application number: PCT/JP2017/038839
(87) International publication number: WO 2018/100936

(56) References cited:
- WO-A1-2012/086050
- WO-A1-2013/118294
- WO-A1-2013/118294
- JP-A- S5 389 902
- JP-A- H05 316 671
- JP-A- 2005 295 744
- JP-A- 2008 199 831
- JP-A- 2008 220 112
- JP-A- 2017 212 778
- JP-U- S4 858 904
- JP-U- S61 104 743
- US-A1- 2016 211 711
- US-A1- 2016 233 748

## Description

### TECHNICAL FIELD

The present disclosure relates to a rotor used in an electric motor. In particular, the present disclosure relates to a rotor having reduced weight imbalance in a rotation direction, an electric motor including the rotor, and a method for manufacturing the rotor.

### BACKGROUND ART

It is important to reduce vibration in an electric motor that is operating. For example, a commutator motor is known as an electric motor.

In recent years, demands for a product that operates quietly are increasing as for a domestic cleaner provided with a commutator motor. A commutator motor is required to reduce vibration during an operating state that is one cause of noise.

One of causes of vibration of a commutator motor is weight imbalance in a rotation direction of a rotor. That is, in a case where a center of gravity of a rotor is displaced from a central axis of the rotor, centrifugal force proportional to a distance between the center of gravity and the central axis is generated by rotation of the rotor. Since the centrifugal force is proportional to a square of a rotation speed, the centrifugal force becomes large especially in a case where the rotor rotates at a high speed. Centrifugal force caused by weight imbalance generates vibration.

As a known example for solving the above problem, unexamined Japanese Utility Model Registration Application Publication No. 1-120761 discloses an electric motor rotor including an iron core and a rotary shaft. The electric motor rotor has, on a surface of the rotary shaft, a plurality of raised parts that are projections having a thin linear shape and extending in an axial direction. The iron core is press-fitted on the raised parts. With the configuration, unexamined Japanese Utility Model Registration Application Publication No. 1-120761 reduces eccentricity of the iron core from the rotary shaft, thereby reducing weight imbalance in a rotation direction of the rotor.

US 2016/211711 A1 describes a rotor of a rotary electric machine which includes a rotor core. The rotor core has magnet insertion holes which are arranged at first circumferential intervals and in which permanent magnets are disposed. The rotor core includes steel plates, a first core block, and a second core block. The steel plates are stacked in an axial direction of the rotor. The first core block includes first steel plates among the steel plates stacked with rotational stacking at a rotational stacking angle corresponding to a common multiple of a first circumferential interval among the first circumferential intervals and a second circumferential interval among second circumferential intervals. The second core block includes second steel plates among the steel plates stacked with the rotational stacking at the rotational stacking angle from a position shifted by an angle corresponding to the first circumferential interval relative to the first core block.

WO 2013/118294 A1 relates to a core-shaft fastening method and fastening structure. A shaft is fastened into a shaft hole of a core that is constructed with a laminated steel plate, said laminated steel plate being produced by laminating multiple steel plates which have been pressed into a predetermined shape. Here, the core is created by laminating the multiple steel plates such that, of sheared surfaces and fractured surfaces which are created during the press work at the cut end surfaces of the multiple steel plates which constitute the upper half of the laminated steel plate, the sheared surfaces are placed on the bottom side while the fractured surfaces are placed on the top side, and, of sheared surfaces and fractured surfaces which are created during the press work at the cut end surfaces of the multiple steel plates which constitute the lower half of the laminated steel plate, the sheared surfaces are placed on the top side while the fractured surfaces are placed on the bottom side. Subsequently, the shaft is fastened into the shaft hole, which is created on the core, by means of shrink-fitting.

### SUMMARY OF THE INVENTION

The invention is defined by the subject-matter of the independent claims. The dependent claims are directed to advantageous embodiments.

### ADVANTAGES OF THE INVENTION

Advantageously, a rotor used in an electric motor includes an iron core having a plurality of stacked bodies formed by stacking core sheets having a predetermined shape, wherein the plurality of stacked bodies are disposed while causing angles of the plurality of stacked bodies in a rotation direction of the rotor to be different from each other.

Advantageously, an electric motor includes this rotor and a stator that faces the rotor.

Advantageously, a method for manufacturing a rotor of an electric motor is a method for manufacturing a rotor of an electric motor including an iron core including a stacked body formed by stacking core sheets having a predetermined shape. The manufacturing method includes preparing a plurality of stacked bodies and forming the iron core by disposing the plurality of stacked bodies while causing angles of the plurality of stacked bodies in a rotation direction of the rotor to be different from each other.

According to a rotor of an electric motor according to an aspect of the present disclosure, weight imbalance in the rotation direction can be reduced.

### BRIEF DESCRIPTION OF DRAWINGS

FIG. 1 is an exploded perspective view of an electric blower including an electric motor according to a first exemplary embodiment.
FIG. 2 is a cross-sectional view of the electric blower including the electric motor according to the first exemplary embodiment.
FIG. 3 is a view for explaining a rotor of the electric motor according to the first exemplary embodiment.
FIG. 4 is a view for explaining a method for manufacturing a stacked body according to the first exemplary embodiment.
FIG. 5A is a view for explaining the method for manufacturing the stacked body according to the first exemplary embodiment.
FIG. 5B is a detailed cross-sectional view for explaining VB illustrated in FIG. 5A.
FIG. 6 is a perspective view of the stacked body according to the first exemplary embodiment.
FIG. 7 is a plan view of the stacked body according to the first exemplary embodiment.
FIG. 8 is a side view of the stacked body according to the first exemplary embodiment.
FIG. 9 is a view for explaining a method for manufacturing the rotor of the electric motor according to the first exemplary embodiment.
FIG. 10 is a cross-sectional view of the rotor of the electric motor according to the first exemplary embodiment.
FIG. 11 is a detailed cross-sectional view for explaining AAI illustrated in FIG. 10 of the rotor of the electric motor according to the first exemplary embodiment.
FIG. 12 is a detailed cross-sectional view for explaining AAc illustrated in FIG. 10 of the rotor of the electric motor according to the first exemplary embodiment.
FIG. 13 is a detailed cross-sectional view for explaining AAr illustrated in FIG. 10 of the rotor of the electric motor according to the first exemplary embodiment.
FIG. 14 is a plan view of a stacked body according to a modification of the first exemplary embodiment.
FIG. 15 is a view for explaining a method for manufacturing a rotor of an electric motor according to an example not covered by the invention.
FIG. 16 is a cross-sectional view of the rotor of the electric motor according to the example.
FIG. 17 is a detailed cross-sectional view for explaining BBI illustrated in FIG. 16 of the rotor of the electric motor according to the example.
FIG. 18 is a detailed cross-sectional view for explaining BBc illustrated in FIG. 16 of the rotor of the electric motor according to the example.
FIG. 19 is a detailed cross-sectional view for explaining BBr illustrated in FIG. 16 of the rotor of the electric motor according to the example.

### DESCRIPTION OF EMBODIMENTS

### (Underlying knowledge forming basis of present disclosure)

As a measure for optimizing weight balance in a rotation direction of a rotor, the weight balance in the rotation direction is modified in a state where the rotor is fitted. Specifically, an outer periphery of the rotor is cut or a resin or a metal piece is added in a state where the rotor is fitted. However, cutting the outer periphery of the rotor widens a gap from a stator. This undesirably changes an amount of magnetic flux, thereby leading to unstable characteristics. Furthermore, the added resin or metal piece is undesirably scattered due to centrifugal force during rotation of the rotor. It is therefore difficult to obtain a low-vibration electric motor that rotates at a high speed.

As another measure for optimizing weight balance in a rotation direction of a rotor, coaxial deviation is reduced by reducing clearance between an iron core and a rotary shaft in a so-called inner rotor. Specifically, a plurality of raised parts are provided along an axial direction on a surface of a rotary shaft, as in the above known example. However, in a case where raised parts are provided, coaxial deviation caused by a dimensional variation of the raised parts cannot be eliminated. Furthermore, it is necessary to perform raising processing on the rotary shaft. This undesirably increases a number of steps. It is therefore difficult to easily obtain a rotor having reduced weight balance in a rotation direction.

As another measure for optimizing weight balance in a rotation direction of a rotor, weight imbalance caused by a thickness deviation of a magnetic steel sheet is modified by so-called rotational buildup in an iron core of a rotor formed by stacking magnetic steel sheets. However, rotational buildup, which forms a core by stacking magnetic steel sheets while rotating the magnetic steel sheets, requires a step and a device for rotating the magnetic steel sheets one by one. This undesirably requires expensive press molding equipment and increases a number of steps. It is therefore difficult to easily obtain a rotor having reduced weight balance in a rotation direction.

The present disclosure is accomplished in view of the above problems. An exemplary embodiment part of the invention will be described in detail below with reference to the drawings as appropriate. However, descriptions in more detail than necessary may be omitted. For example, a detailed description of a matter which is already well known and a repeated description for a substantially identical configuration may be omitted. This is to avoid an unnecessarily redundant description and to facilitate understanding of a person skilled in the art.

It should be noted that the attached drawings and the following description are provided for those skilled in the art to fully understand the present disclosure, and are not intended to limit the subject matter as described in the appended claims.

### (First exemplary embodiment)

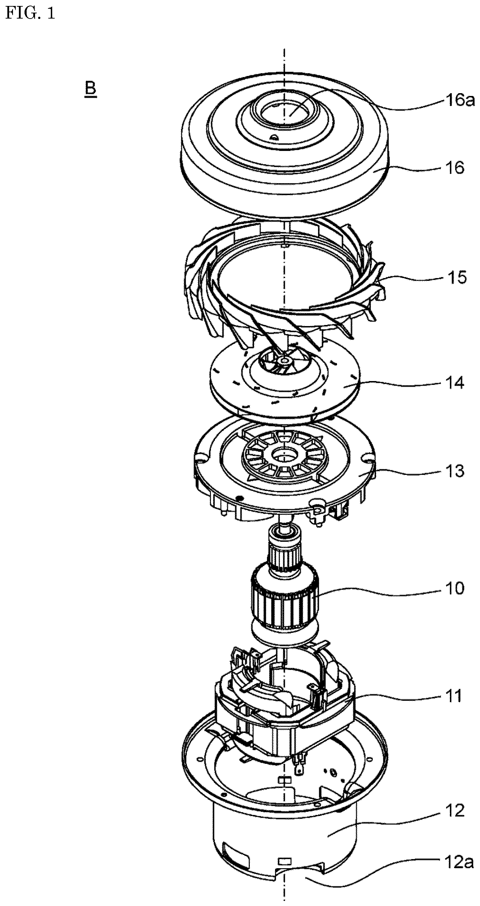

A first exemplary embodiment will be described below by using electric blower B used in a domestic cleaner as an example with reference to FIGS. 1 through 14.

### [1-1. Outline configurations of electric motor and rotor]

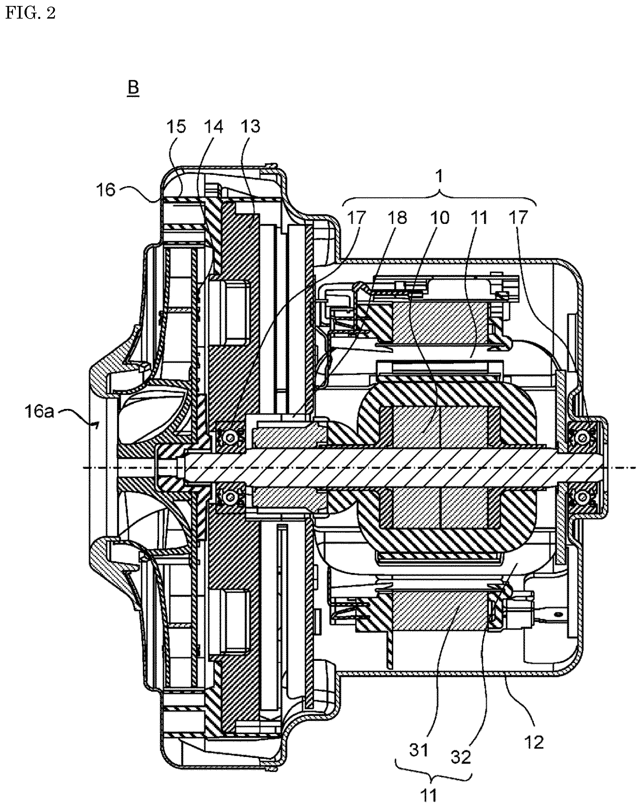

An outline configuration of electric motor 1 is described below with reference to FIGS. 1 and 2.

FIG. 1 is an exploded perspective view of electric blower B including electric motor 1 according to the first exemplary embodiment. FIG. 2 is a cross-sectional view of electric blower B including electric motor 1 according to the first exemplary embodiment.

As illustrated in FIG. 1, electric blower B includes rotor 10, stator 11, housing 12, bracket 13, centrifugal fan 14, air guide 15, and fan case 16.

As illustrated in FIG. 2, housing 12 has a substantially cup shape opened on one side. Housing 12 is, for example, made of a steel sheet. Bracket 13 is disposed in an opening part of housing 12. Bracket 13 is, for example, made of a synthetic resin. Electric motor 1 is disposed inside housing 12 and bracket 13. As illustrated in FIG. 2, electric motor 1 includes rotor 10, stator 11, bearing 17 that rotatably holds rotor 10, and brush 18 that comes into contact with commutator 140 (described later) of rotor 10. In the present exemplary embodiment, a commutator motor thus configured is used as an example of electric motor 1.

Centrifugal fan 14 is attached to a front end of rotor 10 protruding from bracket 13. Air guide 15 is attached to as to serve as a partition between centrifugal fan 14 and bracket 13. Fan case 16 is fixedly combined with housing 12 so as to cover bracket 13, centrifugal fan 14, and air guide 15.

In electric motor 1 that is a commutator motor, stator 11 is a field assembly formed by winding field winding 32 around field core 31 and is fixedly held inside housing 12. Furthermore, rotor 10 that is an armature assembly is disposed inside stator 11 such that field core 31 of stator 11 and armature 101 (described later) of rotor 10 face each other with a slight gap interposed therebetween.

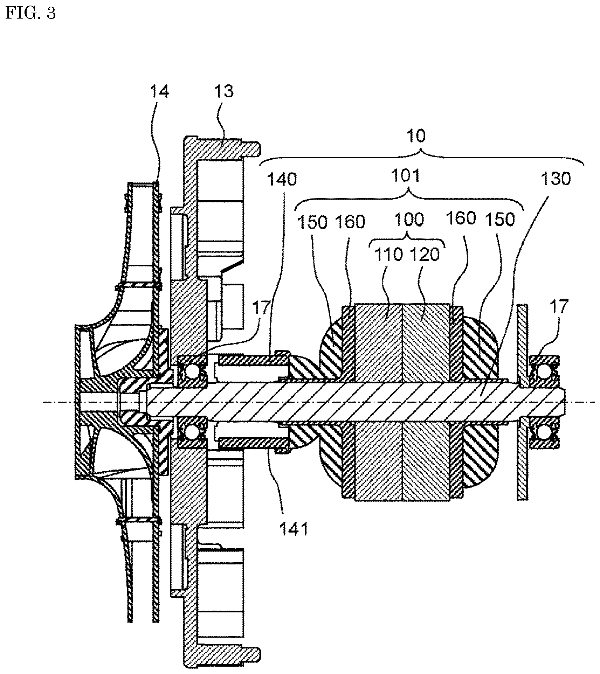

Next, an outline configuration of rotor 10 is described with reference to FIG. 3.

FIG. 3 is a view for explaining rotor 10 of electric motor 1 according to the first exemplary embodiment.

As illustrated in FIG. 3, rotor 10 includes armature 101, rotary shaft 130, and commutator 140, and armature 101 includes iron core 100, winding coil 150, and end sheet 160.

Iron core 100 has first stacked body 110 and second stacked body 120. First stacked body 110 and second stacked body 120 are an example of a stacked body according to the present disclosure. In the present exemplary embodiment, a plurality of stacked bodies according to the present disclosure are only two stacked bodies, i.e., first stacked body 110 and second stacked body 120. In the present disclosure, a single stacked body is formed by creating a core sheet by cutting out a magnetic steel sheet that is a thin sheet into a predetermined shape and then stacking a plurality of core sheets.

First stacked body 110 and second stacked body 120 are attached to rotary shaft 130. Iron core 100 constituted by first stacked body 110 and second stacked body 120 is sandwiched between two end sheets 160. Winding coil 150 is wound around iron core 100 so as to cover end sheets 160. This forms armature 101.

Rotary shaft 130 extends in the axial direction, and both ends of rotary shaft 130 are rotatably held by bearing 17 fixed to housing 12 (see FIG. 2) and bearing 17 fixed to bracket 13.

Commutator 140 is configured such that a plurality of commutator pieces 141 formed from metal plates that are long in the axial direction are disposed on an outer periphery of a body at regular intervals in a circumferential direction. Winding coil 150 is connected to commutator pieces 141 of commutator 140. Commutator pieces 141 that constitute commutator 140 are in contact with brush 18 (see FIG. 2) fixed to bracket 13.

### [1-2. Method for manufacturing stacked body]

Next, a method for manufacturing first stacked body 110 and second stacked body 120 is described.

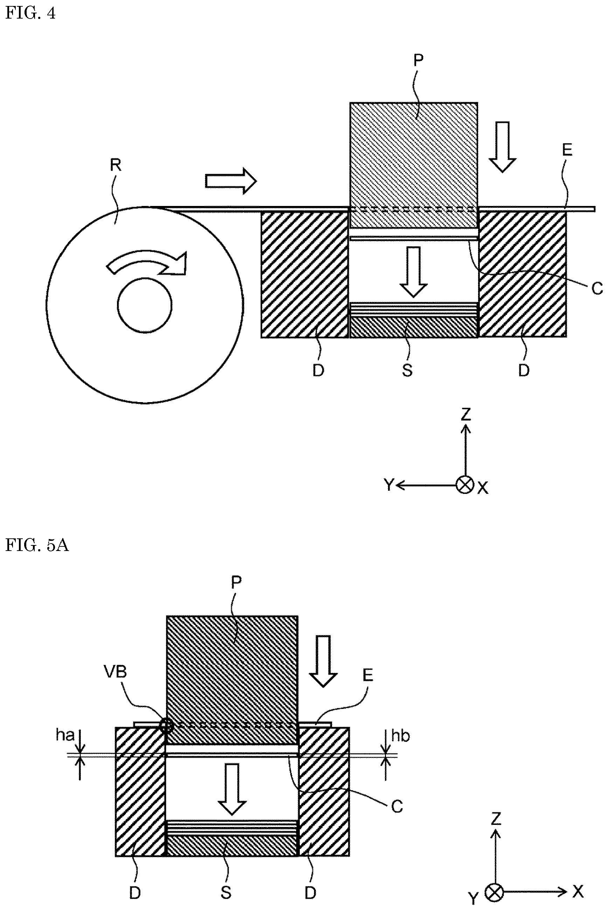

FIGS. 4 and 5A are views for explaining the method for manufacturing first stacked body 110 and second stacked body 120 according to the first exemplary embodiment. In the following description, the method is described by using X-, Y-, and Z-axes in FIGS. 4 and 5A. The X-axis corresponds to a width direction of magnetic steel sheet E, the Y-axis corresponds to a longitudinal direction of magnetic steel sheet E, and the Z-axis corresponds to a thickness direction of magnetic steel sheet E. Hereinafter, it is assumed that a positive direction of the X-axis, a negative direction of the X-axis, a positive direction of the Y-axis, a negative direction of the Y-axis, a positive direction of the Z-axis, and a negative direction of the Z-axis are right, left, far, near, up, and down, respectively.

As illustrated in FIG. 4, magnetic steel sheet E wound out toward the near side by roll R is punched out by punch P and die D, and thus core sheet C having a predetermined shape is cut out. Core sheet C is stacked on stacker S such that a longitudinal direction and a width direction of punched out magnetic steel sheet E coincide with each other. In other words, core sheet C is punched out without rotating magnetic steel sheet E, punch P, and die D in a plane direction, i.e., without rotating magnetic steel sheet E, punch P, and die D about the Z-axis. Then, core sheet C that has been punched out is stacked on stacker S without rotating core sheet C in the plane direction, i.e., without rotating core sheet C about the Z-axis. By stacking a predetermined number of core sheets C, first stacked body 110 and second stacked body 120 that will be described later are formed.

Magnetic steel sheet E has a minute thickness deviation in the width direction. As illustrated in FIG. 5A viewed from the near side, core sheet C cut out from magnetic steel sheet E has a difference corresponding to the thickness deviation of magnetic steel sheet E between thickness ha on the left side, which is one side in the width direction, and thickness hb on the right side, which is the other side in the width direction.

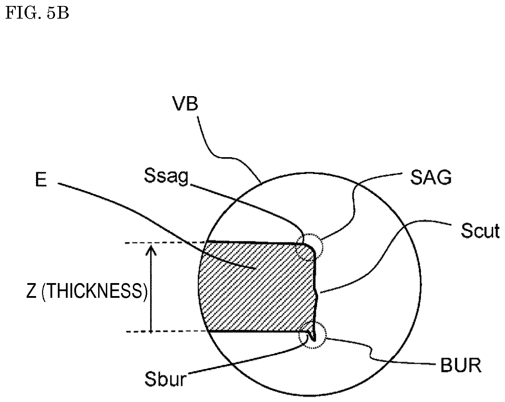

It is generally known that a cut layer called shear droop and burr is formed on a cut surface that is a cut edge of an end surface of magnetic steel sheet E when magnetic steel sheet E is cut out by punching processing using punch P and die D. FIG. 5B is a detailed cross-sectional view illustrating a part indicated by VB in FIG. 5A and is an enlarged view of cut surface Scut formed when magnetic steel sheet E is cut out. As illustrated in FIG. 5B, shear droop SAG and burr BUR are formed on an upper side (a side closer to punch P) and a lower side (a side closer to stacker S, i.e., a side opposite to punch P), respectively on cut surface Scut of magnetic steel sheet E that is an outer side relative to punch P when magnetic steel sheet E is cut out. Shear droop SAG is a region that has a smooth surface and has a round curved shape when the cut edge is viewed from a side. Burr BUR is a region that has a rough surface and has a shape protruding from a lower corner when the cur edge is viewed from a side. Hereinafter, surface Ssag on which shear droop SAG is formed is referred to as a shear droop surface, and surface Sbur on which burr BUR is formed is referred to as a burr surface, as illustrated in FIG. 5B.

### [1-3. Configuration of stacked body]

Next, configurations of first stacked body 110 and second stacked body 120 is described.

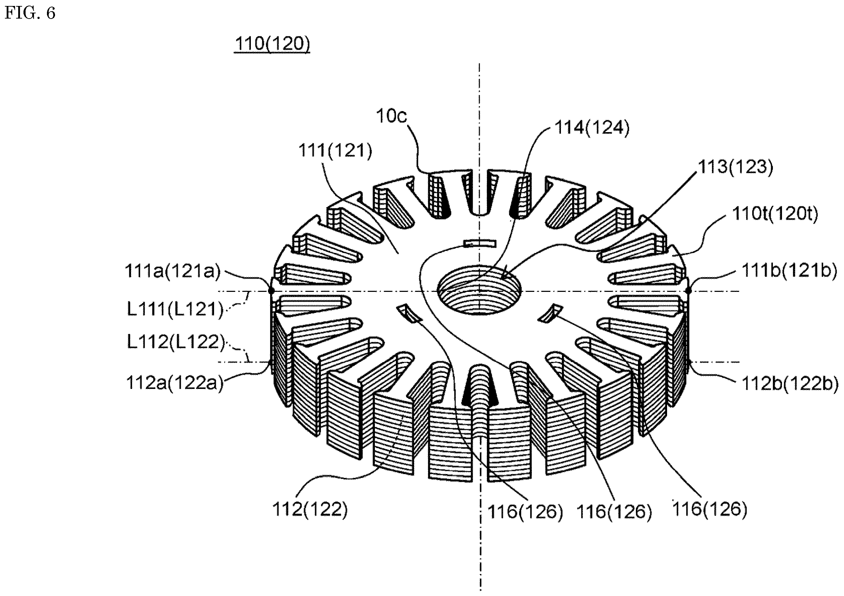

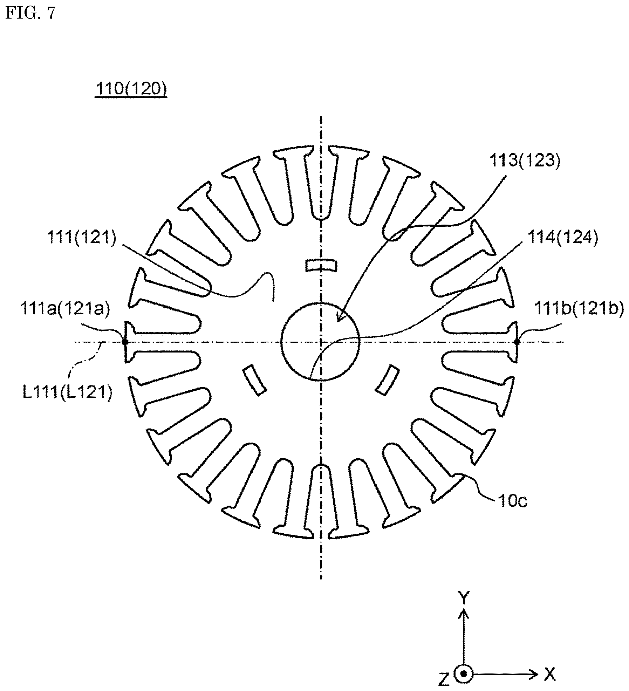

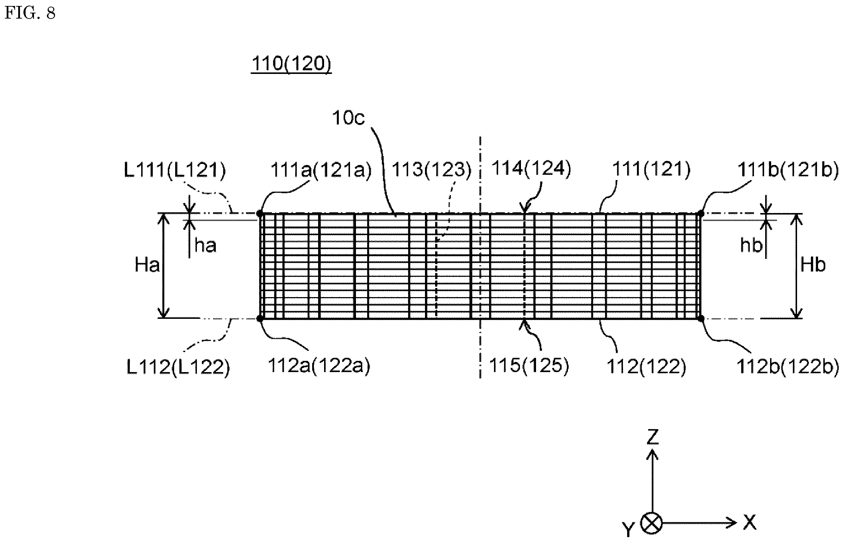

FIG. 6 is a perspective view of first stacked body 110 according to the first exemplary embodiment. FIG. 7 is a plan view of first stacked body 110 according to the first exemplary embodiment. FIG. 8 is a side view of first stacked body 110 according to the first exemplary embodiment. The X-, Y-, and Z-axes in FIGS. 7 and 8 correspond to the X-, Y-, and Z-axes in FIGS. 4 and 5A. In FIGS. 6 through 8, constituent elements of second stacked body 120 according to the first exemplary embodiment are indicated by reference signs in brackets.

As illustrated in FIG. 6, first stacked body 110 is provided with a plurality of teeth 110t on a circumference of first stacked body 110 and is constituted by a plurality of core sheets 10c stacked so as to have a substantially columnar shape. First stacked body 110 has first plane 111 and second plane 112 that correspond to outer principal surfaces of topmost and bottommost core sheets 10c, respectively.

Hereinafter, a term "teeth" (a plural form of "tooth") or a term "tooth" is used depending on a circumstance.

A plurality of tooth parts radially protruding from a center of first stacked body 110 toward the circumference are referred to as teeth (a plural form of "tooth"). Meanwhile, a single tooth part among the plurality of tooth parts of first stacked body 110 is referred to as a tooth.

First stacked body 110 has, in a central part, shaft hole 113 that passes through first stacked body 110. As illustrated in FIG. 3, shaft hole 113 is a hole that allows rotary shaft 130 to hold first stacked body 110. That is, by inserting rotary shaft 130 into shaft hole 113, inner circumferential surfaces of core sheets 10c and rotary shaft 130 are made in close contact with each other, and thereby first stacked body 110 is held by rotary shaft 130.

Shaft hole 113 is formed, for example, by punching processing. In the punching processing, shaft hole 113 is punched out from up to down, i.e., from first plane 111 toward second plane 112. This forms shear droop surface 114 on a part, on the side closer to first plane 111, of an end surface of shaft hole 113 (i.e., inner circumferential surfaces of core sheets 10c that are formed by punching). That is, shear droop surface 114 having shear droop SAG whose cross section is curved as described with reference to FIG. 5B is formed on this end surface on the side closer to first plane 111 that is a ring-shaped region ranging from a planar part of first plane 111 to an inside of shaft hole 113. Furthermore, burr surface 115 (see FIG. 8) that is a region where burr BUR having a shape protruding from the end surface of shaft hole 113 is formed on a part, on the side closer to second plane 112, of the end surface of shaft hole 113.

A core sheet is provided with three swages 116. Swages 116 are V-shaped clamp mechanisms called V swages. Three swages 116 of one core sheet 10c and three swages 116 of another core sheet 10c are engaged with each other so as to generate fixing force. In this way, the plurality of core sheets 10c of first stacked body 110 are coupled to one another.

An X-axis direction in FIG. 7 illustrating first stacked body 110 corresponds to the X-axis direction in FIG. 5A, i.e., the width direction of magnetic steel sheet E. A Y-axis direction in FIG. 7 illustrating first stacked body 110 corresponds to the Y-axis direction in FIG. 4, i.e., the longitudinal direction of magnetic steel sheet E.

In FIG. 7, dashed line L111 that passes a center of first stacked body 110 and is parallel with the X-axis is defined on first plane 111. A left one of intersections of the outer circumference of first stacked body 110 and dashed line L111 is referred to as intersection 111a. A right one of the intersections of the outer circumference of first stacked body 110 and dashed line L111 is referred to as intersection 111b.

Similarly, as illustrated in FIG. 8, dashed line L112, intersection 112a, and intersection 112b are defined on second plane 112. In plan view (see FIG. 7), dashed line L112, intersection 112a, and intersection 112b on second plane 112 overlap dashed line L111, intersection 111a, and intersection 111b on first plane 111, respectively.

As illustrated in FIG. 8, thickness Ha of a left side of first stacked body 110 is defined between intersection 111a and intersection 112a. Furthermore, thickness Hb of a right side of first stacked body 110 is defined between intersection 111b and intersection 112b. Thickness Ha is substantially equal to a value obtained by multiplying thickness ha by a number of stacked core sheets 10c. Thickness Hb is substantially equal to a value obtained by multiplying thickness hb by a number of stacked core sheets 10c. Thickness Ha and thickness Hb have a difference corresponding to the thickness deviation of magnetic steel sheet E in the width direction.

Second stacked body 120 has a configuration substantially identical to first stacked body 110, and description thereof is omitted. As indicated by the brackets in FIGS. 6 through 8, first plane 111 and second plane 112 of first stacked body 110 correspond to first plane 121 and second plane 122 of second stacked body 120, respectively. Intersection 111a, intersection 111b, intersection 112a, and intersection 112b of first stacked body 110 correspond to intersection 121a, intersection 121b, intersection 122a, and intersection 122b of second stacked body 120, respectively. Dashed lines L111 and L112 of first stacked body 110 correspond to dashed lines L121 and L122 of second stacked body 120, respectively. Tooth 110t of first stacked body 110 corresponds to tooth 120t of second stacked body 120. Shaft hole 113 of first stacked body 110 corresponds to shaft hole 123 of second stacked body 120. Shear droop surface 114 of first stacked body 110 corresponds to shear droop surface 124 of second stacked body 120. Burr surface 115 of first stacked body 110 corresponds to burr surface 125 of second stacked body 120. Swages 116 of first stacked body 110 correspond to swages 126 of second stacked body 120.

A number of stacked core sheets 10c of first stacked body 110 is equal to a number of stacked core sheets 10c of second stacked body 120. The thickness distribution of first stacked body 110 is equal to a thickness distribution of second stacked body 120. Accordingly, a thickness of a left side of second stacked body 120 defined between intersection 121a and intersection 122a is Ha. A thickness of a right side of second stacked body 120 defined between intersection 121b and intersection 122b is Hb.

### [1-4. Method for inserting stacked body]

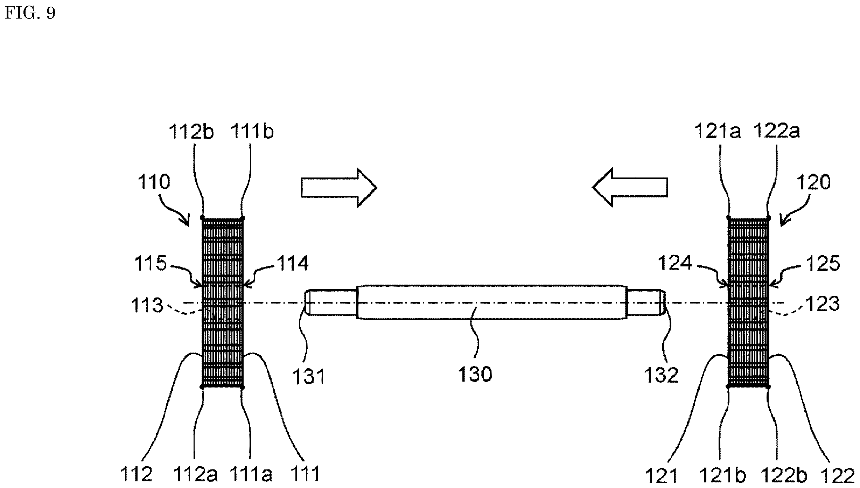

FIG. 9 is a view for explaining a method for manufacturing rotor 10 of the electric motor according to the first exemplary embodiment.

Rotary shaft 130 has first end 131 and second end 132.

First stacked body 110 is attached to rotary shaft 130 from first end 131 side such that rotary shaft 130 is inserted into shaft hole 113 in a press-fitted state. In this process, first stacked body 110 is attached to rotary shaft 130 in a manner such that first plane 111 of first stacked body 110 faces rotary shaft 130. That is, first stacked body 110 is attached to rotary shaft 130 from first end 131 in a manner such that shear droop surface 114 faces rotary shaft 130.

Second stacked body 120 is attached to rotary shaft 130 from second end 132 such that rotary shaft 130 is inserted into shaft hole 123 in a press-fitted state. In this process, rotary shaft 130 is inserted into shaft hole 123 in a manner such that first plane 121 of second stacked body 120 faces rotary shaft 130. That is, second stacked body 120 is attached to rotary shaft 130 from the second end 132 side in a manner such that shear droop surface 124 faces rotary shaft 130.

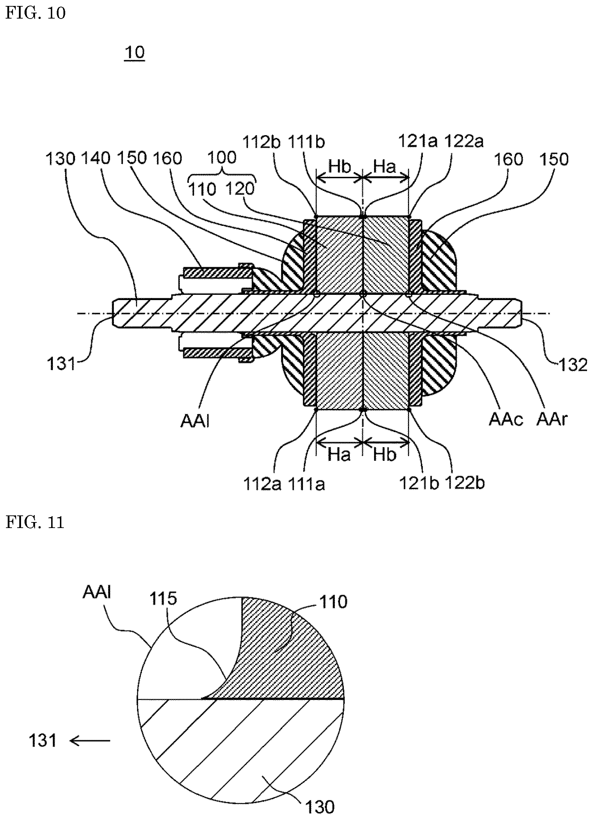

That is, first stacked body 110 is fitted into rotary shaft 130 from first end 131 in a manner such that shear droop surface 114 of first stacked body 110 faces rotary shaft 130. Second stacked body 120 is fitted into rotary shaft 130 from second end 132 in a manner such that shear droop surface 124 of second stacked body 120 faces rotary shaft 130. By thus fixing first stacked body 110 and second stacked body 120 to predetermined positions of rotary shaft 130, iron core 100 (see FIG. 10) is formed.

First stacked body 110 and second stacked body 120 are fixed to rotary shaft 130 while determining positions of first stacked body 110 and second stacked body 120 in the rotation direction such that intersection 111a and intersection 121b overlap each other. In other words, first stacked body 110 and second stacked body 120 are fixed to rotary shaft 130 while determining positions of first stacked body 110 and second stacked body 120 in the rotation direction such that intersection 111b and intersection 121a overlap each other.

That is, first stacked body 110 and second stacked body 120 that are a plurality of stacked bodies are prepared, and iron core 100 is formed by disposing first stacked body 110 and second stacked body 120 such that angles of first stacked body 110 and second stacked body 120 in the rotation direction of rotor 10 (see FIG. 10) are different from each other.

### [1-5. Detailed configuration of rotor]

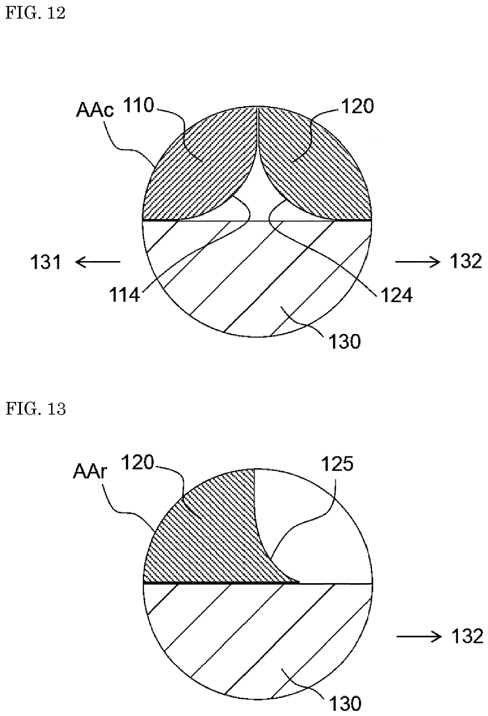

FIG. 10 is a cross-sectional view rotor 10 of electric motor 1 according to the first exemplary embodiment. FIG. 11 is a detailed cross-sectional view for explaining AAl illustrated in FIG. 10 of rotor 10 of electric motor 1 according to the first exemplary embodiment. FIG. 12 is a detailed cross-sectional view for explaining AAc illustrated in FIG. 10 of rotor 10 of electric motor 1 according to the first exemplary embodiment. FIG. 13 is a detailed cross-sectional view for explaining AAr illustrated in FIG. 10 of rotor 10 of electric motor 1 according to the first exemplary embodiment.

First, a configuration of iron core 100 formed by first stacked body 110 and second stacked body 120 is described.

As illustrated in FIG. 10, first stacked body 110 and second stacked body 120 are fixed to rotary shaft 130 such that intersection 111a and intersection 111b overlap intersection 121b and intersection 121a, respectively. That is, first stacked body 110 is disposed in a state reverse to second stacked body 120 in the rotation direction of rotor 10. In other words, in the present exemplary embodiment, first stacked body 110 and second stacked body 120 are disposed on rotary shaft 130 such that surfaces of first stacked body 110 and second stacked body 120 are in contact with each other in a manner such that positions (i.e., left and right in FIG. 5A) of core sheets 10c that constitute first stacked body 110 and core sheets 10c that constitute second stacked body 120 in the width direction in the punching processing are reverse to each other.

A thickness of iron core 100 defined between intersection 112a and intersection 122b is a sum of thickness Ha and thickness Hb. A thickness of iron core 100 defined between intersection 112b and intersection 122a is also a sum of thickness Ha and thickness Hb. That is, iron core 100 is formed from two stacked bodies in a state where the thickness deviations of first stacked body 110 and second stacked body 120 are offset. As a result, a deviation of the center of gravity of iron core 100 from rotary shaft 130 is smaller than a case where an iron core is constituted by a single stacked body.

Next, details of a state where rotary shaft 130 is inserted into shaft hole 113 and shaft hole 123 are described.

Rotary shaft 130 is inserted into shaft hole 113 and shaft hole 123 in a press-fitted state.

As illustrated in FIG. 11, burr surface 115 of first stacked body 110 faces first end 131 of rotary shaft 130. That is, burr surface 115 is located so as to be gotten caught on rotary shaft 130 in a case where first stacked body 110 is extracted from rotary shaft 130 toward first end 131.

As illustrated in FIG. 12, shear droop surface 114 of first stacked body 110 faces second end 132 of rotary shaft 130. Furthermore, shear droop surface 124 of second stacked body 120 faces first end 131 of rotary shaft 130.

As illustrated in FIG. 13, burr surface 125 of second stacked body 120 faces second end 132 of rotary shaft 130. That is, burr surface 125 is located so as to be gotten caught on rotary shaft 130 in a case where second stacked body 120 is extracted from rotary shaft 130 toward second end 132.

### [1-6. Operation of electric motor and rotor]

Operation of electric motor 1 and rotor 10 configured as described above is described with reference to FIGS. 2 and 3.

When electric power is supplied to electric motor 1, a field electric current flows through field winding 32 in stator 11, and an armature electric current flows through winding coil 150 of armature 101 through brush 18 in rotor 10. Torque occurs between a magnetic flux generated in stator 11 by the field electric current and the armature electric current flowing through armature 101. This rotates rotor 10.

Centrifugal fan 14 rotates as rotor 10 rotates. Air is sucked from inlet port 16a into fan case 16 by rotation of centrifugal fan 14. The air sucked into fan case 16 is guided to the outer periphery of fan case 16. The air guided to the outer periphery of fan case 16 becomes a swirl flow in a gap between air guide 15 and fan case 16. The air that became a swirl flow is guided toward a center of bracket 13. The air guided toward the center of bracket 13 is discharged to an outside of electric blower B through exhaust port 12a (see FIG. 1) of housing 12 while cooling rotor 10 and stator 11 of electric motor 1.

### [1-7. Effects and others]

As described above, in the present exemplary embodiment, rotor 10 includes iron core 100 having stacked bodies formed by stacking core sheets 10c having a predetermined shape, iron core 100 has a plurality of stacked bodies, and first stacked body 110 and second stacked body 120 that are the plurality of stacked bodies are disposed such that angles of first stacked body 110 and second stacked body 120 in the rotation direction of rotor 10 are different from each other. In the present exemplary embodiment, rotor 10 is manufactured by preparing a plurality of stacked bodies and forming iron core 100 by stacking first stacked body 110 and second stacked body 120 that are the plurality of stacked bodies such that angles of first stacked body 110 and second stacked body 120 in the rotation direction of rotor 10 are different from each other. As described later, core sheets 10c having a predetermined shape can be obtained by punching out core sheet 10c so as to have a predetermined shape from a magnetic steel sheet.

As described in BACKGROUND ART, in a case where a center of gravity of a rotor is displaced from a central axis of the rotor, centrifugal force proportional to a distance between the center of gravity of the rotor and the central axis of the rotor is generated by rotation of the rotor. The centrifugal force is proportional to a square of a rotation speed of the rotor. In electric blower B used in a domestic cleaner, a rotor rotates at a high speed of 40,000 rpm to 50,000 rpm. Accordingly, in a case where a center of gravity of the rotor is markedly deviated from a central axis of the rotor, large centrifugal force is generated, and the centrifugal force generates vibration.

Meanwhile, in rotor 10 according to the present exemplary embodiment, first stacked body 110 and second stacked body 120 are disposed so as to be reverse to each other in the rotation direction. As a result, the weight imbalance of first stacked body 110 in the rotation direction and the weight imbalance of second stacked body 120 in the rotation direction are offset. In this way, iron core 100 having reduced weight imbalance in the rotation direction can be formed. Furthermore, eccentricity of the center of gravity of rotor 10 from the central axis of rotor 10 becomes small. Accordingly, rotor 10 can reduce centrifugal force during a rotating state. Furthermore, rotor 10 can reduce vibration during the rotating state. As a result, rotor 10 can reduce noise during the rotating state.

In the present exemplary embodiment, first stacked body 110 and second stacked body 120 that are a plurality of stacked bodies have, in central parts, shaft hole 113 and shaft hole 123, respectively, and rotor 10 has rotary shaft 130 inserted into shaft hole 113 and shaft hole 123.

With this configuration, the present disclosure can be applied to a so-called inner rotor in which rotary shaft 130 is inserted into shaft hole 113 of first stacked body 110 and shaft hole 123 of second stacked body 120. It is therefore possible to reduce especially vibration of an inner rotor that rotates at a high speed, thereby reducing noise.

In the present exemplary embodiment, rotor 10 is configured such that rotary shaft 130 is inserted into shaft hole 113 and shaft hole 123 in a press-fitted state.

With this configuration, first stacked body 110 and second stacked body 120 that constitute iron core 100 are fixed to rotary shaft 130 by friction. This makes it possible to prevent relative movement in the rotation direction and axial direction. Furthermore, it is possible to reduce coaxial deviation between first stacked body 110 and second stacked body 120 that constitute iron core 100 and rotary shaft 130. Furthermore, it is possible to obtain rotor 10 having a simpler structure than a structure in which an iron core is fixed by forming a raised part or a fitting groove on rotary shaft 130.

In rotor 10 according to the present exemplary embodiment, the plurality of stacked bodies include first stacked body 110 that is disposed closest to first end 131 of rotary shaft 130 and second stacked body 120 that is disposed closest to second end 132 of rotary shaft 130. Shear droop surface 114 and shear droop surface 124 are formed on an end surface of shaft hole 113 and an end surface of shaft hole 123, respectively. Shear droop surface 114 of first stacked body 110 faces second end 132, and shear droop surface 124 of second stacked body 120 faces first end 131. In the present exemplary embodiment, rotor 10 is formed by the following manufacturing method. Specifically, first stacked body 110 is fitted into rotary shaft 130 from first end 131 in a manner such that shear droop surface 114 of first stacked body 110 faces rotary shaft 130. Furthermore, second stacked body 120 is fitted into rotary shaft 130 from second end 132 in a manner such that shear droop surface 124 of the second stacked body faces rotary shaft 130. By thus fixing first stacked body 110 and second stacked body 120 to rotary shaft 130, iron core 100 is formed.

In this way, rotary shaft 130 is inserted into first stacked body 110 and second stacked body 120 while using shear droop surface 114 and shear droop surface 124 as guides. Therefore, in rotor 10 according to the present exemplary embodiment, first stacked body 110 and second stacked body 120 are easily fitted into rotary shaft 130.

Furthermore, burr surface 115 of first stacked body 110 faces first end 131 of rotary shaft 130. Burr surface 125 of second stacked body 120 faces second end 132 of rotary shaft 130. Therefore, in rotor 10 according to the present exemplary embodiment, slip-out load of first stacked body 110 and second stacked body 120 from rotary shaft 130 can be increased.

As described above, in the present exemplary embodiment, stacked bodies are easily fitted into rotary shaft 130, and the stacked bodies that have been fitted into rotary shaft 130 do not easily slip out from rotary shaft 130.

In rotor 10 according to the present exemplary embodiment, the plurality of stacked bodies are constituted by only two stacked bodies, i.e., first stacked body 110 and second stacked body 120.

With this configuration, rotor 10 can be constituted by only a combination of two stacked bodies. It is therefore possible to reduce a number of components of rotor 10 and a number of steps of a manufacturing process.

Furthermore, in rotor 10 according to the present exemplary embodiment, first stacked body 110 is disposed in a state reverse to second stacked body 120 in the rotation direction of rotor 10.

With this configuration, a thickest part of first stacked body 110 and a thinnest part of second stacked body 120 are combined. This makes it possible to form iron core 100 in which the thickness deviation of first stacked body 110 and the thickness deviation of second stacked body 120 offset each other and the weight imbalance in the rotation direction is reduced.

Furthermore, in the present exemplary embodiment, first stacked body 110 and second stacked body 120 are disposed such that angles of first stacked body 110 and second stacked body 120 in the rotation direction of the rotor are different from each other by 180°. However, the "reversed state" according to the present disclosure includes a case where the angles of first stacked body 110 and second stacked body 120 in the rotation direction of the rotor have a manufacturing error from a standard of 180°. Furthermore, the "reversed state" according to the present disclosure includes a case where the stacked bodies are displaced by a single tooth from the state where the angles of first stacked body 110 and second stacked body 120 are different from each other by 180°, for example, due to a manufacturing variation.

In rotor 10 according to the present exemplary embodiment, a number of stacked core sheets of first stacked body 110 is equal to a number of stacked core sheets of second stacked body 120.

This can make the configuration of first stacked body 110 and the configuration of second stacked body 120 substantially equal to each other. It is therefore possible to manufacture and manage first stacked body 110 and second stacked body 120 not as components of different model numbers but as components of an identical model number. Furthermore, the thickness deviation of first stacked body 110 that is caused by thickness deviations of core sheets is substantially equal to the thickness deviation of second stacked body 120 that is caused by thickness deviations of core sheets. Accordingly, in a case where iron core 100 is formed by combining first stacked body 110 and second stacked body 120 in a reverse state, a thickness distribution of iron core 100 becomes substantially uniform. It is therefore possible to form iron core 100 in which weight imbalance in the rotation direction is further reduced.

Note that the expression "a number of stacked sheets is equal" includes a case where there is an error in a number of stacked sheets due to a manufacturing variation. Specifically, iron core 100 having a stacking thickness of 19.95 ± 0.25 mm is created by using magnetic steel sheets having a thickness of 0.15 mm. In this case, in a case where 133 magnetic steel sheets that have a designed value are stacked, a stacking thickness is 19.95 mm, and therefore iron core 100 formed within the desired dimensional range can be obtained. However, the magnetic steel sheets have a manufacturing variation. Accordingly, iron core 100 is created by using 133 ± 1 magnetic steel sheets. That is, the stacking thickness of iron core 100 is caused to fall within the desired dimensional range by adding or removing a single magnetic steel sheet. That is, the expression "a number of stacked sheets is equal" in the present disclosure refers to a number of sheets that allows the stacking thickness of iron core 100 to fall within a predetermined range as described above, for example.

### [1-8. Modification of first exemplary embodiment]

In the present exemplary embodiment, rotor 10 may be provided with a cutout in a shaft hole.

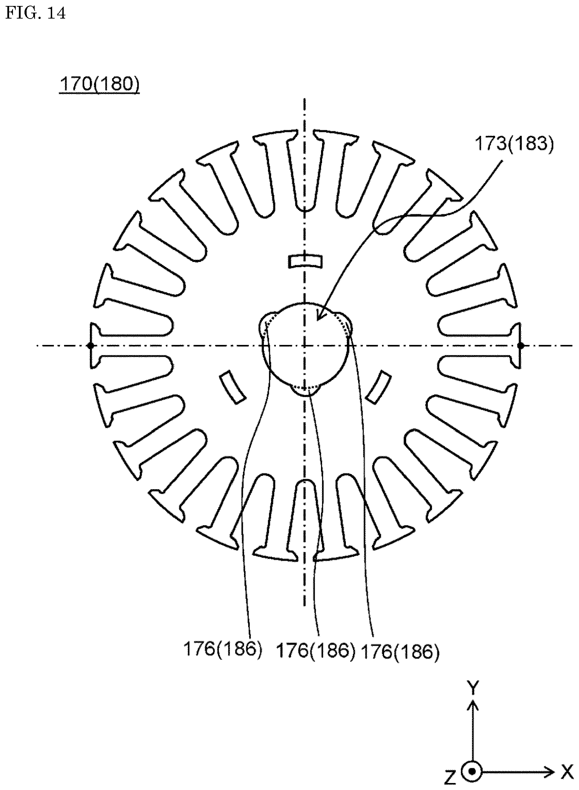

FIG. 14 is a plan view of first stacked body 170 according to a modification of the first exemplary embodiment.

As illustrated in FIG. 14, cutouts 176 that pass through first stacked body 170 in the thickness direction are provided in an inner circumferential surface of shaft hole 173 of first stacked body 170. Cutouts 176 each have a substantially arc shape bulged toward an outer circumferential side in plan view. Three cutouts 176 are provided at substantially even intervals in the circumferential direction of shaft hole 173.

Second stacked body 180 has a configuration substantially identical to first stacked body 170, and description of second stacked body 180 is omitted. Shaft hole 173 of first stacked body 170 corresponds to shaft hole 183 of second stacked body 180. Cutouts 176 of first stacked body 170 correspond to cutouts 186 of second stacked body 180.

A method for manufacturing a rotor according to the modification is substantially similar to the method for inserting a stacked body according to the present exemplary embodiment. That is, as illustrated in FIG. 9, first stacked body 170 is attached to rotary shaft 130. The presence of cutouts 176 causes a core sheet close to cutouts 176 that constitutes shaft hole 173 to be slightly warped toward first end 131 of rotary shaft 130. Furthermore, second stacked body 180 is attached to rotary shaft 130. The presence of cutouts 176 causes a core sheet close to cutouts 176 that constitutes shaft hole 183 to be slightly warped toward second end 132 of rotary shaft 130.

This reduces a contact area between shaft holes 173 and 183 and rotary shaft 130, thereby reducing friction resistance during insertion. It is therefore easier to attach first stacked body 170 and second stacked body 180 to rotary shaft 130.

Furthermore, a core sheet close to a cutout is warped toward an end of rotary shaft 130. Therefore, in the rotor according to the present modification, slip-out load of first stacked body 170 and second stacked body 180 from rotary shaft 130 can be further increased.

In the modification of the present exemplary embodiment, a cutout has a substantially arc shape bulged outward in plan view. However, the shape of the cutout is not limited to this. For example, the shape of the cutout may be substantially triangular or may be substantially rectangular. In the modification of the present exemplary embodiment, three cutouts are provided at substantially even intervals in a circumferential direction of a shaft hole. However, a way in which the cutouts are disposed is not limited to this. It is only necessary that one or more cutouts be provided. In a case where a plurality of cutouts are provided, the plurality of cutouts need not be provided at substantially even intervals in a circumferential direction, and shapes of the plurality of cutouts may be different from each other.

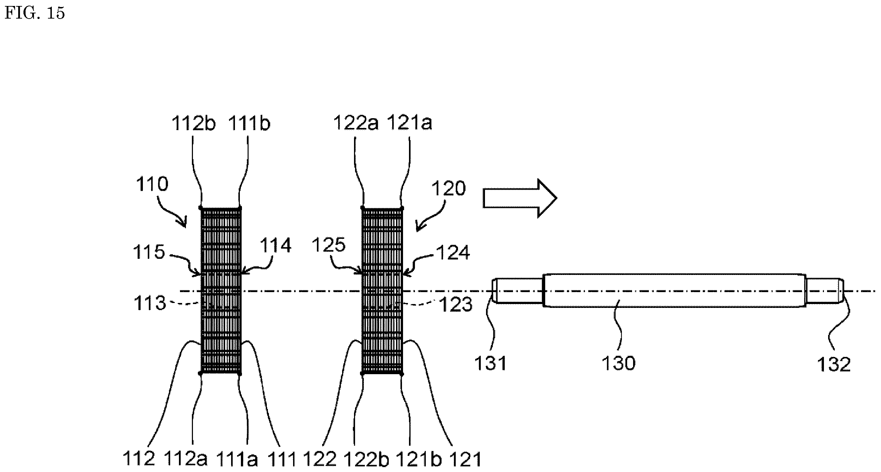

(Example not covered by the invention) An example described with reference to FIGS. 15 through 19.

Rotor 20 according to the example is manufactured by fitting first stacked body 110 and second stacked body 120 into rotary shaft 130 from first end 131 that is one end of rotary shaft 130 in a manner such that shear droop surface 114 and shear droop surface 124 face rotary shaft 130. In this respect, the method for manufacturing rotor 20 is different from the method according to the first exemplary embodiment in which first stacked body 110 is fitted into rotary shaft 130 from first end 131 in a manner such that shear droop surface 114 faces rotary shaft 130, and second stacked body 120 is fitted into rotary shaft 130 from second end 132 in a manner such that shear droop surface 124 of second stacked body 120 faces rotary shaft 130.

As for a detailed configuration of rotor 20 according to the example, shear droop surface 114 and shear droop surface 124 face the same direction in an axial direction of rotary shaft 130. In this respect, the detailed configuration of rotor 20 according to the example is different from the first exemplary embodiment in which shear droop surface 114 faces second end 132, and shear droop surface 124 faces first end 131.

The above differences are described in detail below.

Note that outline configurations of an electric motor and a rotor, a method for manufacturing a stacked body, a configuration of the stacked body, and operation of the electric motor and rotor are substantially similar to those in the first exemplary embodiment. Therefore, description of these is omitted.

### [2-1. Method for manufacturing rotor]

FIG. 15 is a view for explaining a method for manufacturing rotor 20 of the electric motor according to the example.

Rotary shaft 130 has first end 131 and second end 132.

First, second stacked body 120 is attached to rotary shaft 130 from first end 131. Thus, rotary shaft 130 is inserted into shaft hole 123 of second stacked body 120 in a press-fitted state. In this process, second stacked body 120 is attached to rotary shaft 130 in a manner such that first plane 121 of second stacked body 120 faces rotary shaft 130. That is, second stacked body 120 is attached to rotary shaft 130 from first end 131 in a manner such that shear droop surface 124 faces rotary shaft 130.

Next, first stacked body 110 is attached to rotary shaft 130 from first end 131. Thus, rotary shaft 130 is inserted into shaft hole 113 of first stacked body 110 in a press-fitted state. In this process, first stacked body 110 is attached to rotary shaft 130 in a manner such that first plane 111 of first stacked body 110 faces rotary shaft 130. That is, first stacked body 110 is attached to rotary shaft 130 from the first end 131 side in a manner such that shear droop surface 114 faces rotary shaft 130.

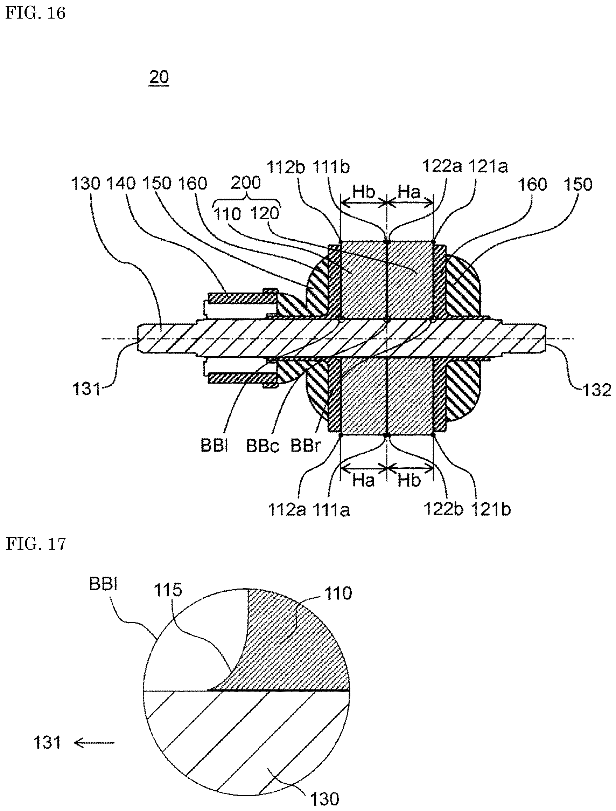

That is, first stacked body 110 and second stacked body 120 are fitted into rotary shaft 130 from first end 131 that is one end of rotary shaft 130 in a manner such that shear droop surface 114 and shear droop surface 124 face rotary shaft 130. By thus fixing first stacked body 110 and second stacked body 120 to predetermined positions of rotary shaft 130, iron core 200 (see FIG. 16) is formed.

First stacked body 110 and second stacked body 120 are attached to rotary shaft 130 while determining positions of first stacked body 110 and second stacked body 120 in the rotation direction such that intersection 111a and intersection 122b overlap each other. In other words, first stacked body 110 and second stacked body 120 are fixed to rotary shaft 130 while determining positions of first stacked body 110 and second stacked body 120 in the rotation direction such that intersection 111b and intersection 122a overlap each other.

That is, first stacked body 110 and second stacked body 120 that are a plurality of stacked bodies are prepared, and iron core 200 is formed by disposing first stacked body 110 and second stacked body 120 such that angles of first stacked body 110 and second stacked body 120 in the rotation direction of rotor 20 (see FIG. 16) are different from each other.

### [2-2. Detailed configuration of rotor]

FIG. 16 is a cross-sectional view of rotor 20 of the electric motor according to the example.

FIG. 17 is a detailed cross-sectional view for explaining BBI illustrated in FIG. 16 of rotor 20 of the electric motor according to the example.

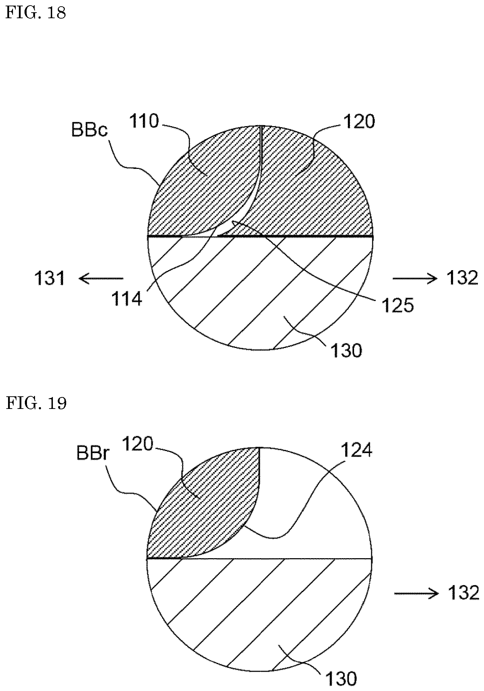

FIG. 18 is a detailed cross-sectional view for explaining BBc illustrated in FIG. 16 of rotor 20 of the electric motor according to the example.

FIG. 19 is a detailed cross-sectional view for explaining BBr illustrated in FIG. 16 of rotor 20 of the electric motor according to the example.

First, a configuration of iron core 200 formed from first stacked body 110 and second stacked body 120 is described.

As illustrated in FIG. 16, first stacked body 110 and second stacked body 120 are fixed to rotary shaft 130 such that intersection 111a and intersection 111b overlap intersection 122b and intersection 122a, respectively. That is, first stacked body 110 is disposed in a state reverse to second stacked body 120 in the rotation direction of rotor 20. In other words, also in the present example, first stacked body 110 and second stacked body 120 are disposed on rotary shaft 130 such that surfaces of first stacked body 110 and second stacked body 120 are in contact with each other in a manner such that positions (i.e., left and right in FIG. 5A) of core sheets 10c that constitute first stacked body 110 and core sheets 10c that constitute second stacked body 120 in the width direction in the punching processing are reverse to each other.

A thickness of iron core 200 defined between intersection 112a and intersection 121b is a sum of thickness Ha and thickness Hb. A thickness of iron core 200 defined between intersection 112b and intersection 121a is also a sum of thickness Ha and thickness Hb. That is, iron core 200 is formed from two stacked bodies in a state where the thickness deviations of first stacked body 110 and second stacked body 120 are offset. As a result, a deviation of the center of gravity of iron core 200 from rotary shaft 130 is smaller than a case where an iron core is constituted by a single stacked body.

Next, details of a state where rotary shaft 130 is inserted into shaft hole 113 and shaft hole 123 are described.

Rotary shaft 130 is inserted into shaft hole 113 and shaft hole 123 in a press-fitted state.

As illustrated in FIG. 17, burr surface 115 of first stacked body 110 faces first end 131 of rotary shaft 130.

As illustrated in FIG. 18, shear droop surface 114 of first stacked body 110 faces second end 132 of rotary shaft 130. Burr surface 125 of second stacked body 120 faces first end 131 of rotary shaft 130.

As illustrated in FIG. 19, shear droop surface 124 of second stacked body 120 faces second end 132 of rotary shaft 130.

That is, shear droop surface 114 of first stacked body 110 and shear droop surface 124 of second stacked body 120 face the same direction in the axial direction of rotary shaft 130.

### [2-3. Effects and others]

As described above, in rotor 20 according to the present example, shear droop surface 114 and shear droop surface 124 are provided on end surfaces of shaft hole 113 and shaft hole 123. Shear droop surface 114 and shear droop surface 124 of the plurality of stacked bodies face the same direction in the axial direction of rotary shaft 130. Furthermore, in the present example, rotor 20 can be obtained by the following manufacturing method. Specifically, the plurality of stacked bodies are fitted into rotary shaft 130 from first end 131 that is one end of rotary shaft 130 in a manner such that shear droop surface 114 and shear droop surface 124 of the plurality of stacked bodies face rotary shaft 130. By thus fixing first stacked body 110 and second stacked body 120 to rotary shaft 130, iron core 200 is formed.

In this way, rotary shaft 130 is inserted into first stacked body 110 and second stacked body 120 while using shear droop surface 114 and shear droop surface 124 as guides. It is therefore easy to fit first stacked body 110 and second stacked body 120 into rotary shaft 130.

Furthermore, both of first stacked body 110 and second stacked body 120 can be attached from first end 131. That is, the plurality of stacked bodies can be attached from one direction. It is therefore possible to simplify a manufacturing process of rotor 20.

First stacked body 170 and second stacked body 180 according to the modification of the first exemplary embodiment can also be applied to the present example. Also in this case, a contact area between shaft holes 173 and 183 and rotary shaft 130 is reduced, and thereby friction resistance during insertion is reduced. It is therefore easier to insert first stacked body 170 and second stacked body 180 into rotary shaft 130.

### (Other exemplary embodiments)

The first exemplary embodiment has been described above as illustrations of the technique disclosed in the present application. However, the technique of the present disclosure is not limited thereto, and can be also applied to exemplary embodiments in which changes, replacements, additions, omissions, and the like are made as far as they do not depart from the scope of the present invention, which is defined by the appended claims.

Hence other exemplary embodiments will be described below.

[1] In the first exemplary embodiment part of the invention, a plurality of stacked bodies each have a shaft hole in a central part, and a rotor includes a rotary shaft inserted into the shaft hole. However, a rotor of an electric motor according to the present disclosure is not limited to this. That is, the rotor according to the present disclosure is not limited to a so-called inner rotor and may be an outer rotor.
[2] In the first exemplary embodiment part of the invention, the rotary shaft is inserted into the shaft hole in a press-fitted state. However, a rotor of an electric motor according to the present disclosure is not limited to this. The rotary shaft need not be inserted into the shaft hole in a press-fitted state. The rotor only needs to be configured to include an iron core having a plurality of stacked bodies formed by stacking core sheets having a predetermined shape, wherein the plurality of stacked bodies are disposed such that angles of the plurality of stacked bodies in a rotation direction of the rotor are different from each other. According to this configuration, weight imbalance of the first stacked body and weight imbalance of the second stacked body in the rotation direction can be offset. This makes it possible to form an iron core having reduced weight imbalance in the rotation direction. Accordingly, the rotor can reduce vibration during a rotating state. As a result, the rotor can reduce noise during the rotating state.
[4] In the first exemplary embodiment part of the invention, the plurality of stacked bodies are constituted by only two stacked bodies, i.e., the first stacked body and the second stacked body. However, a rotor of an electric motor according to the present disclosure is not limited to this. The iron core may have three or more stacked bodies. The stacked bodies only need to be disposed such that angles of the stacked bodies in the rotation direction of the rotor are different from each other.
[5] In the first exemplary embodiment part of the invention, the first stacked body and the second stacked body are mechanically coupled with use of swages. However, a rotor of an electric motor according to the present disclosure is not limited to this. For example, core sheets may be coupled to one another with use of an adhesive. Alternatively, the core sheets need not to be mechanically coupled in a state of a stacked body and only need to be mechanically unified in a state where the core sheets are incorporated as the rotor.
[6] In the first exemplary embodiment part of the invention, the rotor is a rotor of a commutator motor. However, a rotor of an electric motor according to the present disclosure is not limited to this. For example, the rotor may be a rotor used in a brushless motor that does not use a winding coil and a commutator or in an induction machine.

### INDUSTRIAL APPLICABILITY

As described above, according to a rotor of an electric motor according to an aspect of the present disclosure, weight imbalance in the rotation direction can be reduced.

It is therefore possible to reduce vibration caused by a deviation of a center of gravity from a central axis of a rotor especially in an electric motor mounted in a domestic cleaner or an apparatus for automobile that operates at a high rotational speed. Therefore, a rotor of an electric motor according to an aspect of the present disclosure is useful for use that requires low noise and reliability.

### REFERENCE MARKS IN THE DRAWINGS

1 electric motor
10, 20 rotor
10c, C core sheet
11 stator
12 housing
12a exhaust port
13 bracket
14 centrifugal fan
15 air guide
16 fan case
16a inlet port
17 bearing
18 brush
31 field core
32 field winding
100, 200 iron core
101 armature
110, 170 first stacked body (stacked body)
110t, 120t tooth (teeth)
111, 121 first plane
111a, 111b, 112a, 112b, 121a, 121b, 122a, 122b intersection
112, 122 second plane
113, 123, 173, 183 shaft hole
114, 124 shear droop surface
115, 125 burr surface
116, 126 swage
120, 180 second stacked body (stacked body)
130 rotary shaft
131 first end
132 second end
140 commutator
141 commutator piece
150 winding coil
160 end sheet
176, 186 cutout
B electric blower
BUR burr
D die
E magnetic steel sheet
P punch
R roll
S stacker
SAG shear droop
Scut cut surface

## Claims

1. A rotor (10) for
an electric motor (1), the rotor (10) comprising an iron core (100) having a stacked body (110, 120) formed by stacking core sheets (10c) having a predetermined shape, wherein
the iron core (100) has a plurality of the stacked bodies (110, 120), and
the plurality of the stacked bodies (110, 120) are disposed while causing angles of the plurality of the stacked bodies (110, 120) in a rotation direction of the rotor (10) to be different from each other;
wherein:
the plurality of the stacked bodies (110, 120) are constituted by only two stacked bodies (110, 120) that are a first stacked body (110) and a second stacked body (120);
each of the first stacked body (110) and the second stacked body has, in a circumferential direction thereof, one side having a first axial thickness (Ha) and an opposite side having a second axial
thickness (Hb), and, in an axial direction thereof, a burr surface (115, 125) and a shear droop surface (114, 124); **characterized in that**:
the shear droop surfaces (114, 124) of the first stacked body (110) and the second stacked body (120) are in contact with each other; and
the first stacked body (110) and the second stacked body (120) are disposed such that, in the rotation direction of the rotor (10), the one side of the first stacked body (110) having the first axial thickness (Ha) axially overlaps the opposite side of the second stacked body (120) having the second axial thickness (Hb).

2. The rotor (10) according to claim 1, wherein
the plurality of the stacked bodies (110, 120) each have a shaft hole (113) in a central part, and
the rotor (10) comprises a rotary shaft (130) inserted into the shaft hole (113).

3. The rotor (10) according to claim 2, wherein the rotary shaft (130) is inserted into the shaft hole (113) in a press-fitted state.

4. The rotor (10) according to claim 2 or 3, wherein
the first stacked body (110) is disposed closest to a first end (131) of the rotary shaft (130), and
the second stacked body (120) disposed closest to a second end (132) of the rotary shaft (130),
the shear droop surface (114, 124) is provided on an end surface of the shaft hole (113),
the shear droop surface (114, 124) of the first stacked body (110) faces the second end (132), and
the shear droop surface (114, 124) of the second stacked body (120) faces the first end (131).

5. The rotor (10) according to claim 2 or 3, wherein
the shear droop surface (114, 124) is provided on an end surface of the shaft hole (113), and
a plurality of the shear droop surfaces (114, 124) of the plurality of the stacked bodies (110, 120) face a same direction in an axial direction of the rotary shaft (130).

6. The rotor (10) according to any one of claims 2 to 5, wherein the shaft hole (113) is provided with a cutout.

7. The rotor (10) according to claim 1, wherein a number of stacked core sheets (10c) of the first stacked body (110) is equal to a number of stacked core sheets (10c) of the second stacked body (120).

8. An electric motor (1) comprising:
the rotor (10) according to any one of claims 1 to 7; and
a stator (11) that faces the rotor (10).

9. A method for manufacturing a rotor (10) for an electric motor (1), the rotor (10) including an iron core (100) having two stacked bodies (110, 120) formed by stacking core sheets (10c) having a predetermined shape, the method comprising:
preparing a first stacked body (110) and a second stacked body (120), wherein each of the first stacked body (110) and the second stacked body (120) has, in a circumferential direction, one side having a first axial thickness (Ha) and an opposite side having a second axial thickness (Hb), and, in an axial direction, a burr surface (115, 125) and a shear droop surface (114, 124); and
forming the iron core (100) by disposing the two the stacked bodies (110, 120) while causing angles of the two stacked bodies (110, 120), in a rotation direction of the rotor (10), to be different from each other;
**characterized by**:
the first stacked body (110) and the second stacked body (120) are disposed such that the shear droop surfaces (114, 124) of the first stacked body (110) and the second stacked body (120) are in contact with each other; and
the first stacked body (110) and the second stacked body (120) are disposed such that, in the rotation direction of the rotor (10), the one side of the first stacked body (110) having the first axial thickness (Ha) axially overlaps the opposite side of the second stacked body (120) having the second axial thickness (Hb).

## Patentansprüche

1. Rotor (10) für einen Elektromotor (1), wobei der Rotor (10) einen Eisenkern (100) mit einem gestapelten Körper (110, 120) umfasst, der durch Stapeln von Kernblechen (10c) mit einer vorbestimmten Form gebildet ist, wobei
der Eisenkern (100) eine Mehrzahl der gestapelten Körper (110, 120) aufweist, und
die Mehrzahl der gestapelten Körper (110, 120) angeordnet sind, wobei bewirkt wird, dass Winkel der Mehrzahl der gestapelten Körper (110, 120) in einer Drehrichtung des Rotors (10) voneinander verschieden sind;
wobei:
die Mehrzahl der gestapelten Körper (110, 120) aus nur zwei gestapelten Körpern (110, 120) bestehen, die ein erster gestapelter Körper (110) und ein zweiter gestapelter Körper (120) sind;
jeder der ersten gestapelten Körper (110) und der zweiten gestapelten Körper hat in einer Umfangsrichtung davon eine Seite mit einer ersten axialen Dicke (Ha) und eine gegenüberliegende Seite mit einer zweiten axialen Dicke (Hb), und in einer axialen Richtung davon, eine Gratfläche (115, 125) und eine Scherabfallfläche (114, 124);
**dadurch gekennzeichnet, dass**:
die Scherabfallflächen (114, 124) des ersten gestapelten Körpers (110) und des zweiten gestapelten Körper (120) miteinander in Kontakt stehen; und
der erste gestapelte Körper (110) und der zweite gestapelte Körper (120) so angeordnet sind, dass in Drehrichtung des Rotors (10) die eine Seite des ersten gestapelten Körpers (110) mit der ersten axialen Dicke (Ha) axial überlappt mit der gegenüberliegenden Seite des zweiten gestapelten Körpers (120) mit der zweiten axialen Dicke (Hb).

2. Rotor (10) nach Anspruch 1, wobei
die mehreren gestapelten Körper (110, 120) jeweils ein Wellenloch (113) in einem Mittelteil haben, und
der Rotor (10) eine Drehwelle (130) umfasst, die in das Wellenloch (113) eingesetzt ist.

3. Rotor (10) nach Anspruch 2, wobei die Drehwelle (130) in das Wellenloch (113) in einem pressgepassten Zustand eingesetzt ist.

4. Rotor (10) nach Anspruch 2 oder 3, wobei
der erste gestapelte Körper (110) am nächsten zu einem ersten Ende (131) der Drehwelle (130) angeordnet ist, und
der zweite gestapelte Körper (120) am nächsten zu einem zweiten Ende (132) der Drehwelle (130) angeordnet ist,
die Scherabfallfläche (114, 124) an einer Endfläche des Wellenlochs (113) vorgesehen ist, die Scherabfallfläche (114, 124) des ersten Stapelkörpers (110) dem zweiten Ende (132) zugewandt ist, und
die Scherabfallfläche (114, 124) des zweiten Stapelkörpers (120) dem ersten Ende (131) zugewandt ist.

5. Rotor (10) nach Anspruch 2 oder 3, wobei
die Scherabfallfläche (114, 124) an einer Endfläche des Wellenlochs (113) vorgesehen ist, und
mehrere der Scherabfallflächen (114, 124) der Mehrzahl der gestapelten Körper (110, 120) in einer axialen Richtung der Drehwelle (130) in dieselbe Richtung weisen.

6. Rotor (10) nach einem der Ansprüche 2 bis 5, wobei das Wellenloch (113) mit einer Aussparung versehen ist.

7. Rotor (10) nach Anspruch 1, wobei eine Anzahl von gestapelten Kernblechen (10c) des ersten gestapelten Körpers (110) gleich einer Anzahl von gestapelten Kernblechen (10c) des zweiten gestapelten Körper (120) ist.

8. Elektromotor (1), umfassend:
den Rotor (10) nach einem der Ansprüche 1 bis 7; und
einen Stator (11), der dem Rotor (10) zugewandt ist.

9. Verfahren zum Herstellen eines Rotors (10) für einen Elektromotor (1), wobei der Rotor (10) einen Eisenkern (100) mit zwei gestapelten Körpern (110, 120) enthält, geformt durch Stapeln von Kernblechen (10c) mit einer vorbestimmte Form, wobei das Verfahren umfasst:
Vorbereiten eines ersten gestapelten Körpers (110) und eines zweiten gestapelten Körpers (120), wobei sowohl der erste gestapelte Körper (110) als auch der zweite gestapelte Körper (120) in einer Umfangsrichtung eine Seite mit einer ersten axialen Dicke (Ha) und eine gegenüberliegende Seite mit einer zweiten axialen Dicke (Hb) und, in axialer Richtung, eine Gratfläche (115, 125) und eine Scherabfallfläche (114, 124) haben; und
Bilden des Eisenkerns (100) durch Anordnen der zwei gestapelten Körper (110, 120), wobei bewirkt wird, dass Winkel der zwei gestapelten Körper (110, 120), in einer Drehrichtung des Rotors (10), voneinander verschieden sind ;
charakterisiert durch:
der erste gestapelte Körper (110) und der zweite gestapelte Körper (120) so angeordnet sind, dass die Scherabfallflächen (114, 124) des ersten gestapelten Körpers (110) und des zweiten gestapelten Körpers (120) miteinander in Kontakt sind; und
der erste gestapelte Körper (110) und der zweite gestapelte Körper (120) so angeordnet sind, dass in Drehrichtung des Rotors (10), die eine Seite des ersten gestapelten Körpers (110) mit der ersten axialen Dicke (Ha) axial überlappt mit der gegenüberliegenden Seite des zweiten gestapelten Körpers (120) mit der zweiten axialen Dicke (Hb).

## Revendications

1. Rotor (10) pour un moteur électrique (1), le rotor (10) comprenant un noyau en fer (100) ayant un corps empilé (110, 120) formé en empilant des feuilles de noyau (10c) ayant une forme prédéterminée, dans lequel
le noyau en fer (100) a une pluralité des corps empilés (110, 120), et
la pluralité des corps empilés (110, 120) sont disposés tout en faisant en sorte que des angles de la pluralité des corps empilés (110, 120) dans une direction de rotation du rotor (10) soient différents les uns des autres ;
dans lequel :
la pluralité des corps empilés (110, 120) sont constitués par seulement deux corps empilés (110, 120) qui sont un premier corps empilé (110) et un second corps empilé (120) ;
chacun du premier corps empilé (110) et du second corps empilé a, dans une direction circonférentielle de celui-ci, un côté ayant une première épaisseur axiale (Ha) et un côté opposé ayant une seconde épaisseur axiale (Hb), et, dans une direction axiale de celui-ci, une surface de bavure (115, 125) et une surface de tombée de cisaillement (114, 124) ; **caractérisé en ce que** :
les surfaces de tombée de cisaillement (114, 124) du premier corps empilé (110) et du second corps empilé (120) sont en contact l'une avec l'autre ; et
le premier corps empilé (110) et le second corps empilé (120) sont disposés de telle sorte que, dans la direction de rotation du rotor (10), l'un côté du premier corps empilé (110) ayant la première épaisseur axiale (Ha) chevauche axialement le côté opposé du second corps empilé (120) ayant la seconde épaisseur axiale (Hb).

2. Rotor (10) selon la revendication 1, dans lequel
la pluralité des corps empilés (110, 120) ont chacun un trou d'arbre (113) dans une partie centrale, et
le rotor (10) comprend un arbre rotatif (130) inséré dans le trou d'arbre (113).

3. Rotor (10) selon la revendication 2, dans lequel l'arbre rotatif (130) est inséré dans le trou d'arbre (113) dans un état ajusté avec serrage.

4. Rotor (10) selon la revendication 2 ou 3, dans lequel
le premier corps empilé (110) est disposé le plus près d'une première extrémité (131) de l'arbre rotatif (130), et
le second corps empilé (120) disposé le plus près d'une seconde extrémité (132) de l'arbre rotatif (130),
la surface de tombée de cisaillement (114, 124) est prévue sur une surface d'extrémité du trou d'arbre (113),
la surface de tombée de cisaillement (114, 124) du premier corps empilé (110) fait face à la seconde extrémité (132), et
la surface de tombée de cisaillement (114, 124) du second corps empilé (120) fait face à la première extrémité (131).

5. Rotor (10) selon la revendication 2 ou 3, dans lequel
la surface de tombée de cisaillement (114, 124) est prévue sur une surface d'extrémité du trou d'arbre (113), et
une pluralité des surfaces de tombée de cisaillement (114, 124) de la pluralité des corps empilés (110, 120) font face à une même direction dans une direction axiale de l'arbre rotatif (130).

6. Rotor (10) selon l'une quelconque des revendications 2 à 5, dans lequel le trou d'arbre (113) est pourvu d'une découpe.

7. Rotor (10) selon la revendication 1, dans lequel un nombre de feuilles de noyau empilées (10c) du premier corps empilé (110) est égal à un nombre de feuilles de noyau empilées (10c) du second corps empilé (120).

8. Moteur électrique (1), comprenant :
le rotor (10) selon l'une quelconque des revendications 1 à 7 ; et
un stator (11) qui fait face au rotor (10).

9. Procédé pour fabriquer un rotor (10) pour un moteur électrique (1), le rotor (10) incluant un noyau en fer (100) ayant deux corps empilés (110, 120) formés en empilant des feuilles de noyau (10c) ayant une forme prédéterminée, le procédé comprenant :
la préparation d'un premier corps empilé (110) et d'un second corps empilé (120), dans lequel chacun du premier corps empilé (110) et du second corps empilé (120) a, dans une direction circonférentielle, un côté ayant une première épaisseur axiale (Ha) et un côté opposé ayant une seconde épaisseur axiale (Hb), et, dans une direction axiale, une surface de bavure (115, 125) et une surface de tombée de cisaillement (114, 124) ; et
la formation du noyau en fer (100) en disposant les deux corps empilés (110, 120) tout en faisant en sorte que des angles des deux corps empilés (110, 120), dans une direction de rotation du rotor (10), soient différents l'un de l'autre ;
**caractérisé en ce que** :
le premier corps empilé (110) et le second corps empilé (120) sont disposés de telle sorte que les surfaces de tombée de cisaillement (114, 124) du premier corps empilé (110) et du second corps empilé (120) sont en contact l'une avec l'autre ; et
le premier corps empilé (110) et le second corps empilé (120) sont disposés de telle sorte que, dans la direction de rotation du rotor (10), l'un côté du premier corps empilé (110) ayant la première épaisseur axiale (Ha) chevauche axialement le côté opposé du second corps empilé (120) ayant la seconde épaisseur axiale (Hb).
